# EUROPEAN PATENT APPLICATION

(11) **EP 3 196 893 A1**
(43) Date of publication of application: **26.07.2017**
(21) Application number: 14881483.3
(22) Date of filing: 21.10.2014
(51) Int. Cl.: H01B 7/36, G02B 6/00

(54) **OBJECT RECOGNITION METHOD AND DEVICE**

(30) Priority: 23.07.2014 CN 201410352476
(71) Applicant: ZTE Corporation, Shenzhen, Guangdong 518057 (CN)
(72) Inventor: HAO, Xiangyong, Shenzhen Guangdong 518057 (CN); GONG, Yu, Shenzhen Guangdong 518057 (CN); MA, Aiping, Shenzhen Guangdong 518057 (CN)
(74) Representative: Savi, Massimiliano
(86) International application number: PCT/CN2014/089086
(87) International publication number: WO 2015/117388

(57) **Abstract**

An object recognition apparatus and method are disclosed. The object recognition apparatus includes an illuminable cable (C2), disposed on a target recognized object (C1) and used for highlighting the target recognized object (C1) to a striking state when a light source is guided into the illuminable cable (C2). By adopting a recognition method for the object recognition apparatus, the accuracy and recognition efficiency of recognition of physical connection in an optical fiber device are improved.

## Description

### Technical Field

The present invention relates to the field of communications, and in particular to an object recognition method and apparatus.

### Background

At present, an optical fiber communication system needs a large number of Fiber Optic Patchcords and Fiber Optic Pigtails for physical connection in an optical distribution network. At present, generally the location and recognition between two ends of a fiber cable is implemented by using labels printed or pasted or bound on the fiber cable. Or, it is implemented by lighting both ends of the fiber cable component through a light-emitting diode. This technology requires that a shell of the light-emitting diode should be fixed on a metal reinforcer Bow-type drop cable, and there are requirements and limitations on types of the cable in use. Or, the location and recognition of two ends of the cable are determined by means of an indicator light twinkling on an intelligent panel. Only the two ends of the cable can be located and recognized but the position and routing of the entire cable component cannot be recognized in all the above forms, and especially for application requirements which needs to efficiently extract or pull the cable from a cable bundle and adjust it to other positions.

In particular, under the development status and tendency that a device density increases higher and higher, maintainers are subject to practical factors such as insufficient on-site light, high density of fiber distribution devices and dense fiber cables, so that the maintainers are difficult to accurately and rapidly locate or identify a target maintained Fiber Optic Patchcord or Fiber Optic Pigtail.

With respect to the above problem in the related art, there has been no effective solution yet.

### Summary

With respect to technical problems of inaccurate location and recognition of physical fiber wiring such as Fiber Optic Patchcords and Fiber Optic Pigtails, etc., in an optical fiber device and low efficiency in the related art, the present invention provides an object recognition method and apparatus to solve at least the above technical problems.

According to one embodiment of the present invention, an object recognition apparatus is provided, which includes: an illuminable cable, disposed on a target recognized object and arranged to highlight the target recognized object to a striking state when a light source is guided into the illuminable cable.

Alternatively, the illuminable cable is disposed on the target recognized object in at least one of the following ways: being bound on the target recognized object or being laid in or on the target recognized object.

Alternatively, when the light source is guided into the illuminable cable, a part or all of the illuminable cable highlights the target recognized object to the striking state.

Alternatively, the target recognized object includes at least one of the following: a Fiber Optic Patchcord, a Fiber Optic Pigtail and an optical cable.

Alternatively, the object recognition apparatus is applied to an optical wiring device.

According to another embodiment of the present invention, an object recognition method is provided, which includes: disposing an illuminable cable on a target recognized object; and guiding a light source into the illuminable cable so that the illuminable cable highlights the target recognized object to a striking state.

Alternatively, disposing an illuminable cable on a target recognized object includes: binding and/or laying the illuminable cable in or on the target recognized object.

Alternatively, the method further includes: when the light source is guided into the illuminable cable, a part or all of the illuminable cable highlighting the target recognized object to the striking state.

Alternatively, the target recognized object includes at least one of the following: a Fiber Optic Patchcord, a Fiber Optic Pigtail and an optical cable.

Alternatively, the object recognition method is applied to an optical wiring device.

Through the present invention, by adopting the technical means of disposing the illuminable cable on the target recognized object, so as to highlight the target recognized object to the striking state when the light source is guided into the illuminable cable, the technical problems of inaccurate location and recognition of physical connection such as Fiber Optic Patchcords and Fiber Optic Pigtails in the optical fiber device and low efficiency in the related art are solved, thereby improving the accuracy and the recognition efficiency of location and recognition of physical connection and distribution.

### Brief Description of Drawings

The accompanying drawings described here are used to provide further understanding to the present invention and constitute a part of the present application. The schematic embodiments of the present invention and illustrations thereof are used to explain the present invention, but do not constitute an inappropriate limitation on the present invention. In the accompanying drawings:
FIG. 1 is a schematic diagram one of decomposition of various function units of an illuminable cable according to an embodiment of the present invention.
FIG. 2 is a schematic diagram two of decomposition of various function units of an illuminable cable according to an embodiment of the present invention.
FIG. 3 is a schematic diagram three of decomposition of various function units of an illuminable cable according to an embodiment of the present invention.
FIG. 4 is a schematic diagram of an application of an illuminable cable in a comprehensive wiring scene according to an embodiment of the present invention.
FIG. 5 is a flow chart of an object recognition method according to an embodiment of the present invention.

### Detailed Description

The present invention will be described in detail with reference to the accompanying drawings and in combination with the embodiments below. It should be noted that the embodiments in the application and the characteristics in the embodiments may be combined with each other in the case of no conflict.

The following embodiments may be applied to an optical wiring scene requiring rapid and accurate location, and may also be expanded to all fields that can be recognized passively by highlighting. With respect to the technical problems of inaccurate location and recognition of physical connection such as Fiber Optic Patchcords and Fiber Optic Pigtails, etc., in an optical fiber device and low efficiency, the embodiments of the present invention provides corresponding solutions, which will be described in detail below. The main design idea of the following embodiments is to bind or lay an illuminable cable in or on an object required to be recognized and highlight a recognized object to a striking state by lighting the fibre cable, so as to achieve the purpose of visualized and rapid location and recognition.

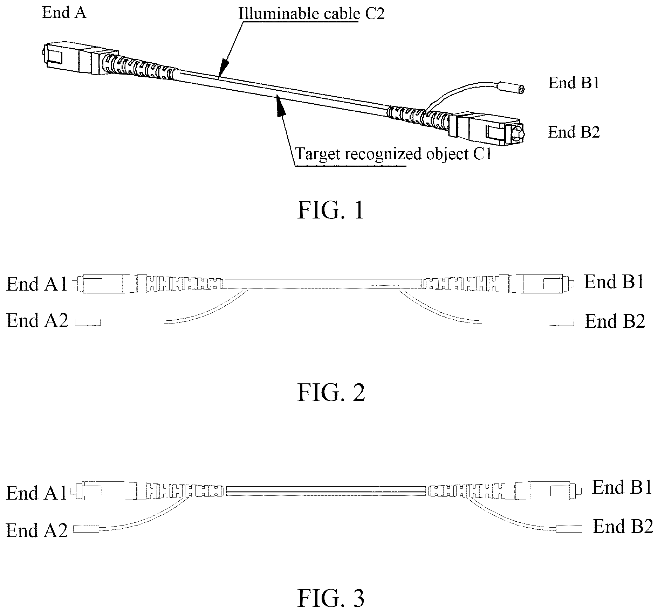

An embodiment provides an object recognition apparatus, as shown in FIG. 1, including: an illuminable cable C2, which is disposed on a target recognized object C1 and used for highlighting the target recognized object to a striking state when a light source is guided into the illuminable cable C2.

In the embodiment, the illuminable cable may be presented as a transparent optical fiber or an optical fiber that is a common optical fiber on which surface coating (the coating may be non-transparent coating or coating with low transparency) is erased.

Through the above scheme, since the illuminable cable can be disposed on the target recognized object, target recognized objects like a Fiber Optic Pigtail, a Fiber Optic Patchcord and an optical cable, etc., can be effectively recognized, which improves the accuracy of locating and recognition of physical connection and the recognition efficiency.

In the embodiment, the illuminable cable C2 is disposed on the target recognized object C1 in at least one of the following ways, but not limited to that: being bound on the target recognized object C1 or being laid in or on the target recognized object C1.

In one alternative embodiment of the present embodiment, when the light source is guided into the illuminable cable C2, a part or all of the illuminable cable C2 highlights the target recognized object C1 to a striking state.

The target recognized object C1 includes but is not limited to at least one of the following: a Fiber Optic Patchcord, a Fiber Optic Pigtail and an optical cable, etc.

The object recognition apparatus provided in the embodiment may be applied to an optical wiring device, to recognize the target recognized objects like the fiber cable in the optical wiring device.

In order to better understand the above embodiment, detailed descriptions will be made in combination with alternative embodiments below.

As shown in FIG. 1, a single end provides a light source guide-in interface, that is, the method is used by guiding the light of the light source into the illuminable cable C2 to make a part or all of the C2 be highlighted for locating and recognizing the target recognized object C1. One of the characteristics of the application is that two ends (an end A and an end B2) of the target object can be lighted, and the parts between the end A and the end B1 or B2 can be lighted totally or sectionally. The aim of the present invention for totally is strikingly highlighting the target object.

As shown in FIG. 2, both ends provide light source guide-in interfaces, and part of paths of the lighted fiber cable and the target object are overlapped. One of the characteristics of the application is that an end A2 and an end B2 of the target object can be lighted, and there is one overlapped or integrated part between A1 and B1 and between A2 and B2.

As shown in FIG. 3, both ends provide light source guide-in interfaces, and part of paths of the lighted fiber cable and the target object are overlapped. One of the characteristics of the application is that two ends (an end A1 and an end A2) of the target object can be lighted, and the parts between the end A1 and the end B1 and between the end B1 and end B2 can be lighted totally or sectionally.

### Practical application scene and case example:

In a high-density and large-capacity optical distribution frame cabinet, one Fiber Optic Patchcord laid with long path and changeable track in the cabinet need to be found from thousands of Fiber Optic Patchcords. In the application environment, the closer the Fiber Optic Patchcord is pulled to the positions of optical connector ports, the easier accidental touching or pulling will occur, thereby influencing service connection and disconnection or stability of other ports. The positions of both ends of the Fiber Optic Patchcord can be found very strikingly through the method of the illuminable cable. Moreover, since the Fiber Optic Patchcord attaches with a fiber cable that can be lighted sectionally in the whole path, the path of the Fiber Optic Patchcord can be found more easily. Such application is particularly used in a vertical shaft or a machine room with a poor light condition.

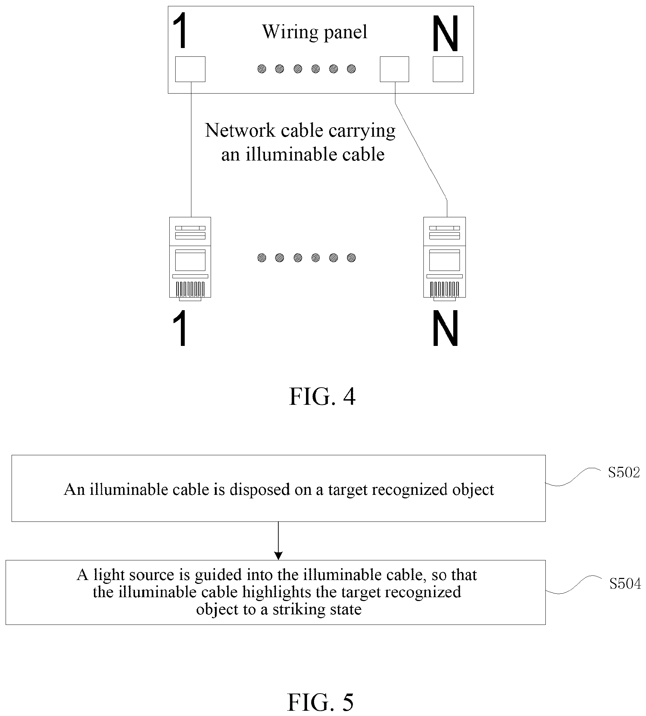

As shown in FIG. 4, for network cables laid in or on invisible positions such as inside the wall or wiring duct, specific positions of corresponding ports may also be recognized by means of lighting the fiber cables when access positions on a wiring template need to be adjusted.

A square connector (one kind of optical connectors) is taken as an example, but the application may be extended to any connectors or any physical structure forms required to be recognized.

An object recognition method is also provided in the embodiment, and as shown in FIG. 5, the method includes the following processing steps.

In step S502, an illuminable cable is disposed on a target recognized object.

In step S504, a light source is guided into the illuminable cable, so that the illuminable cable highlights the target recognized object to a striking state.

There are various implementation ways for the step S502, for example, the above illuminable cable can be bound and/or laid in or on the target recognized object.

In one alternative implementation process, when the light source is guided into the illuminable cable, a part or all of the illuminable cable highlights the target recognized object to the striking state.

In the specific application process, the target recognized object includes, but is not limited to, at least one of the following: a Fiber Optic Patchcord and a Fiber Optic Pigtail.

The object recognition method in the optical fiber device may be applied to an optical wiring device, but it is not limited to this.

The embodiments of the present invention realize the following beneficial effects: a recognized object can be lighted totally or sectionally. For example, if it is applied in a high-density optical wiring device, it is easy to rapidly and accurately find the lighted object from many high-density Fiber Optic Patchcords or Fiber Optic Pigtails, which shortens the search time and improves the efficiency and accuracy.

The above description is only the alternative embodiments of the present invention, which is not used to limit the present invention. The present invention may have various modifications and changes for the people skilled in the art. All the modifications, equivalent substitutions, and improvements, etc. made within the spirit and principle of the present invention shall be contained in the protection scope of the present invention.

### Industrial Applicability

Based on the above technical scheme provided in the embodiments of the present invention, by adopting the technical means of disposing the illuminable cable on the target recognized object, so as to highlight the target recognized object to the striking state when the light source is guided into the illuminable cable, the technical problems of inaccurate location and recognition of physical connection such as Fiber Optic Patchcords and Fiber Optic Pigtails, etc., in the optical fiber device and low efficiency in the related art are solved, thereby improving the accuracy and the recognition efficiency of location and recognition of physical connection and distribution.

## Claims

1. An object recognition apparatus, comprising:
an illuminable cable, disposed on a target recognized object and arranged to highlight the target recognized object to a striking state when a light source is guided into the illuminable cable.

2. The apparatus according to claim 1, wherein, the illuminable cable is disposed on the target recognized object in at least one of the following ways:
being bound on the target recognized object or being laid in or on the target recognized object.

3. The apparatus according to claim 1, wherein, when the light source is guided into the illuminable cable, a part or all of the illuminable cable highlights the target recognized object to the striking state.

4. The apparatus according to any one of claims 1 to 3, wherein, the target recognized object comprises at least one of the following:
a Fiber Optic Patchcord, a Fiber Optic Pigtail and an optical cable.

5. The apparatus according to any one of claims 1 to 3, wherein, the object recognition apparatus is applied to an optical wiring device.

6. An object recognition method, comprising:
disposing an illuminable cable on a target recognized object; and
guiding a light source into the illuminable cable so that the illuminable cable highlights the target recognized object to a striking state.

7. The method according to claim 6, wherein, disposing an illuminable cable on a target recognized object comprises:
binding and/or laying the illuminable cable in or on the target recognized object.

8. The method according to claim 6, further comprising: when the light source is guided into the illuminable cable, a part or all of the illuminable cable highlighting the target recognized object to the striking state.

9. The method according to claim 6, wherein, the target recognized object comprises at least one of the following:
a Fiber Optic Patchcord, a Fiber Optic Pigtail and an optical cable.

10. The method according to any one of claims 6 to 9, wherein, the object recognition method is applied to an optical wiring device.
